# EUROPÄISCHE PATENTANMELDUNG

(11) **EP 0 547 454 A1**
(43) Veröffentlichungstag der Anmeldung: **23.06.1993**
(21) Anmeldenummer: 92120780.9
(22) Anmeldetag: 05.12.1992
(51) Int. Cl.: G11B 15/66, G11B 15/32, G11B 23/037, B65H 18/10, B65H 75/30

(54) **Wickelkern-Spannvorrichtung**

(30) Priorität: 19.12.1991 DE 9115762 U
(71) Anmelder: BASF Magnetics GmbH, D-68165 Mannheim (DE)
(72) Erfinder: Held, Friedrich, W-8033 Planegg (DE); Liepold, August, W-8000 München 70 (DE); Scholtysik, Bernd Dr., W-8000 München 80 (DE); Toral, Jose, W-8000 München 70 (DE)
(74) Vertreter: Langfinger, Klaus-Dieter, Dr.

(57) **Zusammenfassung**

Die Neuerung betrifft Wickelkerne (1) zum Aufschieben auf eine Wickelwelle, wobei jeder Wickelkern (1) entlang seinem Innendurchmesser (2') benachbart der zentralen Bohrung (16) alternierend in beide axiale Richtungen weisende Kerben (3,3') besitzt. Jede Kerbe (3,3') endet in einer vorzugsweise abgeschrägten Stufe (4), welche ungefähr in der geometrischen Mitte (5) des Wickelkerns (1) beginnt. Federbelastete Spannelemente (6,6',7,8) am Umfang (9) jedes einzelwickelkörpers sind mit Vorsprüngen in radialer Richtung versehen, welche in axialer Richtung rastbar mit den Kerben (3,3') der Wickelkerne (1) zusammenwirken.

## Beschreibung

Die Neuerung betrifft eine Spannvorrichtung für Wickelkerne, bestehend aus einer Wickelwelle mit auf ihr drehbar und antreibbar gelagerten Einzelwickelkörpern für Wickelkerne mit inneren zylindrischen Bohrungen, wobei jeder Einzelwickelkörper eine nachgiebige Spannvorrichtung enthält, deren Außendurchmesser größer ist als der Durchmesser der inneren Bohrung der Wickelkerne, wobei die Nachgiebigkeit der Spannvorrichtung ein gleitendes Aufschieben der Wickelkerne in axialer Richtung zuläßt, indem die Spannvorrichtung in radialer Richtung nachgiebige Federelemente enthält und wobei die Spannvorrichtung sowie die Wickelkerne Maßnahmen zum Einrasten der Wickelkerne in axialer Richtung auf jedem Einzelwickelkörper enthalten.

In Wickelmaschinen, insbesondere in kombinierten Längsschneide- und Wickelvorrichtungen, beispielsweise für Magnetbänder, nehmen die Wickelwellen jeweils eine Vielzahl von Wickelkernen auf. Das Bestücken der Wickelwellen mit Wickelkernen ist problematisch, denn die zahlreichen bewickelten Kerne sollen möglichst schnell von der Wickelwelle abgezogen und durch leere Wickelkerne positionsrichtig ersetzt werden. Die Spannvorrichtung soll beim Bestücken ein leichtes und störungsfreies Verschieben der Wickelkerne auf der Welle nicht behindern. Daher kennt man bereits zahlreiche Spannvorrichtungen an der Wickelwelle, wie Spannrollen, Spannstifte oder dergleichen, welche mechanisch aufwendige Konstruktionen darstellen, die die Kosten der Wickelwelle in die Höhe treiben. Die Schwierigkeiten werden um so größer, wenn Einzelwickelkörper mit gesonderten Friktionen eingesetzt werden.

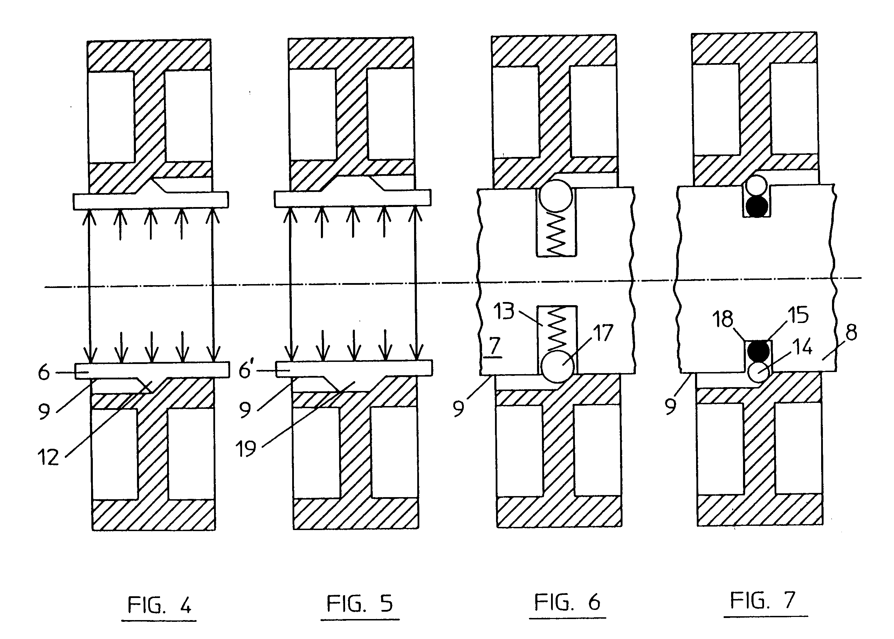

In der Anmeldung P 41 21 244 der Anmelderin werden einige aus dem Stand der Technik bekannte Spannvorrichtungen ausführlich beschrieben. Ebenso ist in der genannten Anmeldung eine Wickelkern-Spannvorrichtung des oben genannten gattungsmäßigen Typs beschrieben, bei der die Spannvorrichtung über den Umfang jedes zylindrischen Einzelwickelkörpers verteilt mehrere Segmente enthält, welche in einer Ringnut sitzen und durch Federelemente belastet sind. Weiterhin ist in dieser Anmeldung in den Figuren 6 und 7 eine Einschnapp- beziehungsweise Zentriervorrichtung für Wickelkerne dargestellt, bestehend aus einem Wulst sowie einem Kugeldruckstück an der Außenseite der Spannvorrichtung, welche ein axiales Aufschieben der Wickelkerne sowie ein Zentrieren ermöglichen.

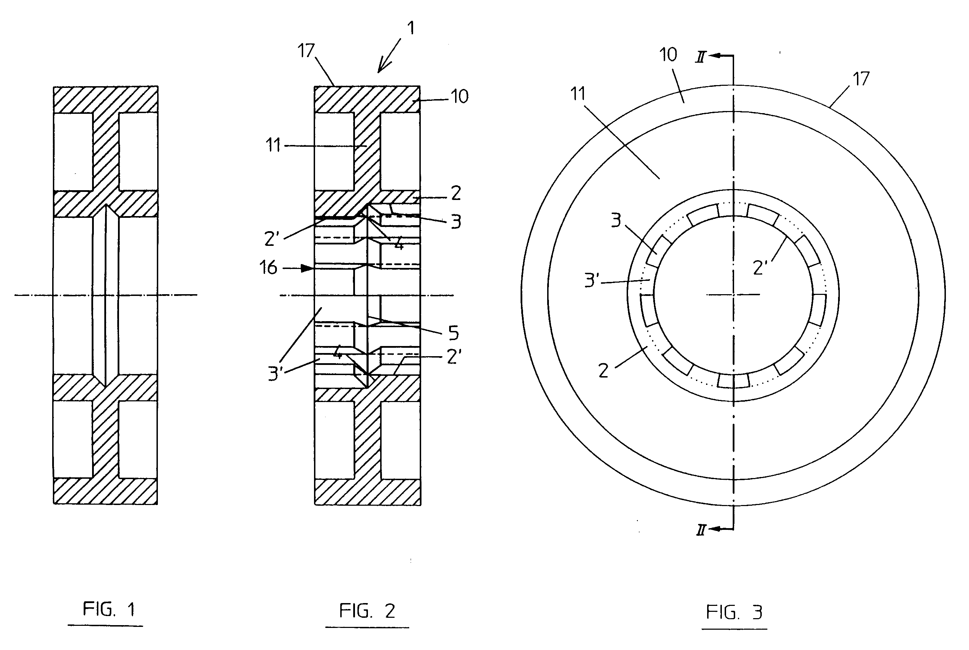

Weiterhin ist eine Zentriervorrichtung für Wickelkerne bekannt, welche in Figur 1 dieser Anmeldung dargestellt ist. Dabei besitzt jeder Wickelkern in seiner Kernbohrung eine Mittelkerbe, in welche ein dazu komplementärer Vorsprung an der Spannvorrichtung eingreift. Dabei hat sich gezeigt, daß Wickelkerne mit einer Kerbe spritztechnisch schwer herstellbar, da nicht einfach entformbar, sind und die Herstellung einer Kerbe durch zerspanende Bearbeitung beispielsweise durch Drehen, sehr aufwendig und teuer ist. Weiterhin hat sich gezeigt, daß beim Bewickeln von Kernen mit ähnlichen Zentriervorrichtungen besonders bei hohen Wickelgeschwindigkeiten die Kerne taumeln, so daß ein unsauberes Wickelbild entsteht.

Die Aufgabe der Neuerung bestand darin, eine Spannvorrichtung der eingangs genannten gattungsmäßigen Art zu finden, welche einen möglichst einfachen Aufbau hat und wobei auch bei hohen Wickelgeschwindigkeiten die Kerne auf der Spannvorrichtung mit hoher Präzision zentriert werden und dabei ohne Komplikationen in axialer Richtung aufgeschoben und abgenommen werden können.

Neuerungsgemäß wurde die Aufgabe gelöst mit einer Spannvorrichtung mit den im kennzeichnenden Teil des Anspruchs 1 genannten Merkmalen. Weitere Einzelheiten der Neuerung gehen aus den Unteransprüchen, den Zeichnungen und der Beschreibung hervor.

Nachstehend wird die Neuerung anhand der Zeichnungen näher erläutert und zwar zeigt
- Figur 1: einen Wickelkern im Querschnitt
- Figur 2: einen Schnitt durch einen neuerungsgemäßen Wickelkern
- Figur 3: eine entsprechende Draufsicht des Kerns gemäß Figur 2
- Figuren 4 - 7: Schnitte durch mehrere Ausführungsformen von Spannelementen im Zusammenwirken mit dem Wickelkern gemäß Figur 2.

Wie aus den Figuren 2 und 3 hervorgeht, besitzt der Wickelkern (1) an seinem Außenumfang (10) die Wickelfläche (17) und ist über einen radial verlaufenden umlaufenden Steg (11) mit dem Innenumfang (2) verbunden und besitzt wie üblich eine innere Bohrung (16).

Neuerungsgemäß sind in Umfangsrichtung entlang des Innendurchmessers (2') gleichmäßig über den Umfang Kerben (3, 3') verteilt, welche alternierend jeweils von der einen und von der anderen Außenseite des Wickelkerns axial ins Innere verlaufen. In einer bevorzugten Ausführung stehen sich jeweils Kerben, welche in unterschiedliche Richtung weisen, einander radial gegenüber. Die Kerben enden jeweils in einer Stufe (4), welche bevorzugt abgeschrägt ist. Die nach beiden Kernseiten weisenden Stufen können beispielsweise in der geometrischen Mitte (5) des Wickelkerns (1) beginnen. Auf diese Weise bilden die Einkerbungen eine nach beiden axialen Seiten offene Mittelkerbe.

Der genannte Kern mit seinem vorstehend beschriebenen gekerbten Innendurchmesser (2, 2', 3, 3') benachbart der inneren Bohrung (16) wirkt einrastbar mit dem nachfolgend genannten Spannelementen zusammen, wobei einige im Rahmen der Neuerung praktikable Ausführungen beispielhaft in den Figuren 4 - 7 dargestellt sind. Jedoch ist jedem Fachmann klar, daß auch weitere Ausführungsformen möglich sind. Die Anzahl der Spannelemente kann gleich der Anzahl der Kerben, aber auch davon verschieden sein.

In der Figur 4 weist die dort dargestellte Spannvorrichtung (6) einen Außenumfang (9) auf, welcher dem Innendurchmesser (2') des gestrichelt markierten Wickelkerns angepaßt ist und der mittig einen vorzugsweise dreieckförmigen Vorsprung (12) in Umfangsrichtung aufweist, dessen Seitenflächen als Anschlag an den Stufen (4) des Wickelkerns dienen und so eine Zentrierung des Kerns bewirken. Das beschriebene Spannelement (6) wird durch ein (nicht gezeichnetes) Federelement, welches in Pfeilrichtung wirkt, in radialer Richtung vorgespannt. Beispiele solcher Federelemente sind in der bereits genannten Anmeldung P 41 21 244 der Anmelderin enthalten.

Die in Figur 5 dargestellte Spannvorrichtung (6') unterscheidet sich vor der vorhergehenden lediglich dadurch, daß der Vorsprung (19) trapezförmig ausgebildet ist, wobei die Trapez-Seitenflächen an der Stufe (4) des Wickelkerns anliegen.

Das in Figur 6 dargestellte Spannelement (7) entspricht bezüglich seiner Außenfläche (9) dem vorgenannten Spannelement (6), jedoch enthält es mittig mehrere Bohrungen (13), in welche ein federbelastetes Kugeldruckstück (17) eingeklemmt ist, so daß die federbelasteten Kugeln als Anschlagfläche für die bereits genannte Stufe (4) wirksam sind.

Schließlich ist in Figur 7 eine weitere Ausführungsform (8) für eine Spannvorrichtung dargestellt. Dabei ist ebenfalls in der Außenfläche (9) mittig eine Vertiefung (18) enthalten, in welcher als Anschlagsfläche für die Stufe (4) eine Wurmfeder (14) in Form eines Spannrings sitzt, welche auf einer elastischen Unterlage (15) radial federnd angebracht ist.

Bei den vorgenannten Spannelementen ist einerseits das axiale Aufschieben der unbewickelten Wickelkerne von beiden Seiten der Wickelwelle ausgehend sowie das Abnehmen der bewickelten Wickelkerne ebenfalls entsprechend einfach zu bewerkstelligen, während andererseits eine spielfreie Zentrierung der Kerne auf jedem Einzelwickelkörper gewährleistet ist, ohne daß die Kerne beim schnellen Bewickeln taumeln.

## Patentansprüche

1. Spannvorrichtung für Wickelkerne, bestehend aus einer Wickelwelle mit auf ihr drehbar und antreibbar gelagerten Einzelwickelkörpern für Wickelkerne mit inneren zylindrischen Bohrungen, wobei jeder Einzelwickelkörper eine nachgiebige Spannvorrichtung enthält, deren Außendurchmesser größer als der Durchmesser der Bohrung der Wickelkerne ist, wobei die Nachgiebigkeit der Spannvorrichtung ein gleitendes Aufschieben der Wickelkerne in axialer Richtung zuläßt, indem die Spannvorrichtung in radialer Richtung nachgiebige Federelemente enthält und wobei sowohl die Spannvorrichtung wie auch die Wickelkerne miteinander korrespondierende Maßnahmen zum Einrasten der Wickelkerne auf dem Einzelwickelkörper enthalten, dadurch gekennzeichnet, daß der Wickelkern (1) in Umfangsrichtung entlang dem Innendurchmesser (2, 2') über den Umfang gleichmäßig verteilte Kerben (3, 3') aufweist, die abwechselnd in die eine und die andere axiale Richtung des Wickelkerns weisen, wobei jede Kerbe (3, 3') in einer vorzugsweise abgeschrägten Stufe (4) endet, welche jeweils ungefähr in der geometrischen Mitte (5) des Wickelkerns beginnt und wobei mit Vorsprüngen in radialer Richtung versehene federbelastete Spannelemente (6, 6', 7, 8), am Umfang (9) des Einzelwickelkörpers in axialer Richtung rastbar mit den Kerben (3, 3') der Wickelkerne zusammenwirken.

2. Spannvorrichtung nach Anspruch 1, dadurch gekennzeichnet, daß jeweils zwei Kerben (3, 3'), die in unterschiedliche axiale Richtung weisen, einander radial gegenüber stehen.

3. Spannvorrichtung nach Anspruch 1, dadurch gekennzeichnet, daß das Spannelement (6) an seinem Außenumfang (9), welcher der Form der inneren Bohrung (16) des Wickelkerns angepaßt ist, mittig einen dreieckigen Vorsprung (12) hat, aufweist (Figur 4).

4. Spannvorrichtung nach Anspruch 1, dadurch gekennzeichnet, daß das Spannelement (6') an seinem Außenumfang, welches der inneren Bohrung des Wickelkerns angepaßt ist, einen trapezförmigen Vorsprung (19) hat (Figur 5).

5. Spannvorrichtung nach Anspruch 1, dadurch gekennzeichnet, daß das Spannelement (7) an seinem Außenumfang, welches der inneren Bohrung des Wickelkerns angepaßt ist, mittig angebrachte Bohrungen (13) aufweist, in welche federbelastete Kugeldruckstücke (17) eingeklemmt sind, die an den abgeschrägten Stufen (4) einrastbar sind (Figur 6).

6. Spannvorrichtung nach Anspruch 1, dadurch gekennzeichnet, daß das Spannelement (8) an seinem Außenumfang (9), welches der inneren Bohrung des Wickelkerns angepaßt ist, eine Vertiefung (18) aufweist, in der eine Wurmfeder (14) sitzt, welche auf einer elastischen Unterlage (15) federnd aufliegt (Figur 7).
